Europäisches Patentamt

European Patent Office

Office européen des brevets

(19)

(11) Publication number: **0 121 573**
**A1**

# (12) EUROPEAN PATENT APPLICATION

published in accordance with Art. 158(3) EPC

(21) Application number: 83903213.3

(22) Date of filing: 14.10.83

Data of the international appli-
cation taken as a basis:

(86) International application number:
PCT/JP 83/00349

(87) International publication number:
WO 84/01676 (26.04.84 84/11)

(51) Int. Cl.³: **H 02 K 21/08**

(30) Priority: 14.10.82 JP 179007/82

(43) Date of publication of application: 17.10.84
Bulletin 84/42

(84) Designated Contracting States: DE FR GB

(71) Applicant: **FANUC LTD, 5-1, Asahigaoka 3-chome
Hino-shi, Tokyo 191 (JP)**

(72) Inventor: **KAWADA, Shigeki, 346-15, Shimoda Hino-shi,
Tokyo 191 (JP)**
Inventor: **AMEMIYA, Yoichi, 1019-357, Nishiterakata-cho
Hachioji-shi, Tokyo 192-01 (JP)**
Inventor: **SOGABE, Masatoyo, 5-20-6, Sanda-cho
Hachioji-shi, Tokyo 193 (JP)**

(74) Representative: **Allman, Peter John et al, Marks and
Clerk Scottish Life House Bridge Street, Manchester
M3 3DP (GB)**

(54) **ROTOR FOR SYNCHRONOUS MOTOR.**

(57) A rotor for a synchronous motor used for driving a
machine tool or the like has a hollow field member (10)
constituted by permanent magnets (11) and magnetic mem-
bers (12) which are alternately disposed in the circumferen-
tial direction thereof. The field members (10) are disposed
around the outer periphery of a shaft (16) formed of a mag-
netic material, with a gap (G) provided therebetween. Thus
any leakage of magnetic flux plenetrating the shaft (16) is
reduced.

SPECIFICATION

## Rotor for Synchronous Motor

TECHNICAL FIELD

The present invention relates to a rotor for a synchronous motor, more particularly to a rotor included in a synchronous motor of a rotating-field type.

BACKGROUND ART

One of the main structural components of a synchronous motor of the rotating-field type is a rotor. As such, there is known one combining permanent magnets and members of magnetic materials in an alternate fashion and formed in a hollow cylindrical shape. In such a type of rotor, it is desirable that the magnetic circuit be efficiently formed, that the rotor does not become a factor increasing the cost of the motor, that the assembly be easy, etc.

In conventional rotors, as explained in detail later with reference to the figures, the above desires have not been satisfied.

DISCLOSURE OF THE INVENTION

The object of the present invention is to provide a rotor in a synchronous motor wherein the magnetic circuit is efficiently formed.

Another object of the present invention is to provide a rotor in a synchronous motor which does not require a shaft of a high priced nonmagnetic material, one of the factors increasing the cost of synchronous motors.

Still another object of the present invention is to provide a rotor in a synchronous motor wherein assembly of permanent magnets and magnetic material steel plates is facilitated.

1

To accomplish the above objects, according to the present invention, there is provided a rotor for a synchronous motor, wherein a hollow magnetic body, comprised of permanent magnets and magnetic members alternately arranged in a circumferential direction, is arranged around shaft, characterized in that the shaft is formed of a magnetic material and a clearance is provided between the circumference of the shaft and the hollow magnetic body.

It is preferable that the hollow magnetic body form a cylindrical shape with a center line coinciding with the axis of the shaft and that the top and bottom of the cylindrically shaped hollow magnetic body be affixed to nonmagnetic endplates.

Further, it is preferable that the shaft pass through and be affixed to the nonmagnetic endplates.

BRIEF MODE FOR CARRYING OUT THE INVENTION

The above objects and features of the present invention and other features thereof will become more apparent from the following description of an embodiment made in reference to the attached drawings.

Figure 1 is a cross-sectional view of an example of a conventional rotor for a synchronous motor;

Fig. 2 is a cross-sectional view of another example of a conventional rotor for a synchronous motor;

Fig. 3 is a cross-sectional view of a rotor for a synchronous motor according to an embodiment of the present invention; and

Fig. 4 is longitudinal cross-sectional view along line IV-IV in Fig. 3.

BEST MODE FOR CARRYING OUT THE INVENTION

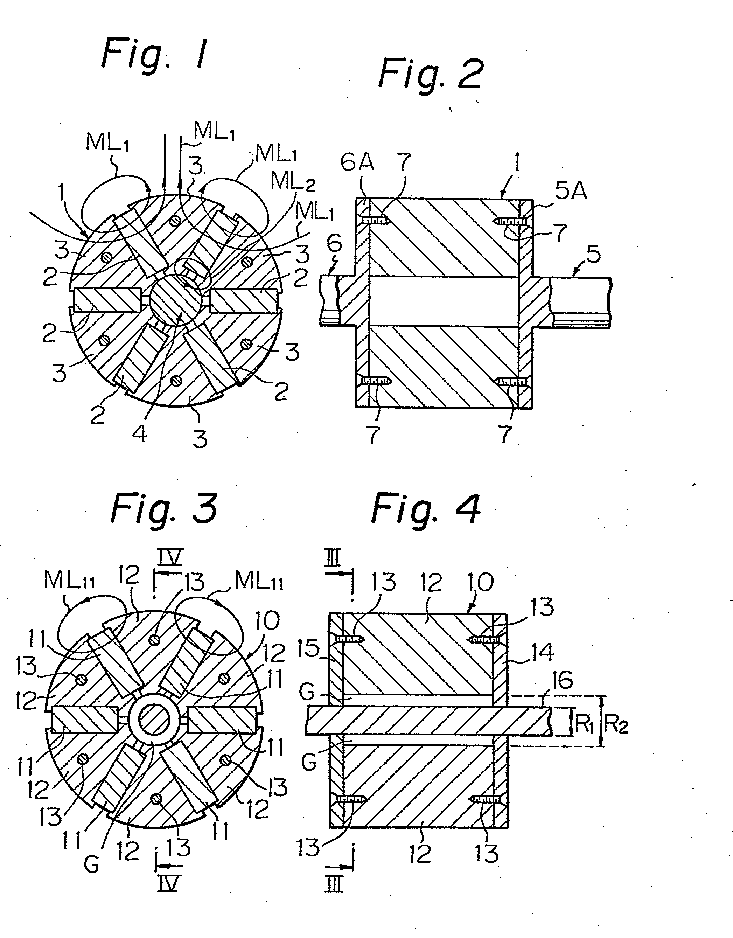

Before explaining the embodiment of the present invention, a description will be made of the prior art and its problems in

reference to Fig. 1 and Fig. 2.

A known, conventional rotor for a synchronous motor comprises a magnetic body 1 of a hollow cylindrical shape with permanent magnets 2 and magnetic members 3 assembled in an alternate fashion and has a shaft 4 pressure-fit in the hollow portion of the magnetic body 1. Figure 1 shows a cross-section of this conventional rotor. Each permanent magnet 2, which has a roughly block-shaped cross-section, is sandwiched between and affixed by two magnetic members 3 and extends in the radial direction of the cross-section from the axis of the shaft 4. The two end sections (not shown) in the axial direction of the shaft 4 protrude out from the two ends of the cylindrically shaped rotor (positioned in the front and the back of the paper in the figure). These protuding portions are supported by the bearing section of the housing, also not shown.

To achieve efficient magnetic interaction between the rotor and the stator (not shown) arranged at the outside of the rotor, the magnetic lines formed by the permanent magnets 2 of the rotor must be concentrated near the circumference of the cross-section of the rotor. With the above-mentioned construction, the magnetic circuits $ML_1$ passing through the adjoining permanent magnets 2 pass through the magnetic members 3 between the permanent magnets 2 and extend outward in the same direction from the rotor. Therefore, the magnetic density of the magnetic circuits $ML_1$ extending outward from the rotor from the magnetic members 3 are principally caused by two permanent magnets 2. Consequently, magnetic flux concentrates near the circumference of the cross-section of the rotor.

However, when the shaft 4 is made of a magnetic material, magnetic circuits $ML_2$ passing through the inside end portions of the permanent magnets 2 and the shaft 4 are unnecessarily formed.

3

This results in the problem of poor efficiency of the motor. For this reason, in the prior art, the entire shaft has been constructed from a nonmagnetic material such as austenite stainless steel. Generally, however, this type of nonmagnetic material is higher in cost compared with magnetic materials, therefore, this has had the disadvantage of inviting higher costs of the motor.

To eliminate the above-mentioned disadvantage, as shown in Fig. 2, consideration has been given to the means of not passing the shaft through the inside of the magnetic body 1, but attaching flange portions 5A and 6A of nonmagnetic flange-equipped shafts 5 and 6 to the ends of the magnetic body 1 by bolts 7. However, such a construction has the disadvantage that it is difficult to align the two shafts 5 and 6 during assembly, which makes the assembly work troublesome.

The present invention, in consideration of the above disadvantages, has as its object the provision of a rotor for a synchronous motor enabling efficient formation of magnetic circuits, not requiring shaft alignment and other troublesome work, and able to be produced cheaper than in the prior art.

Below, an explanation is given of an embodiment of the present invention in reference to Fig. 3 and to Fig. 4, which is a cross-sectional view along line IV-IV of Fig. 3. Figure 3 is a cross-sectional view of Fig. 4 along line III-III.

In Fig. 3 and Fig. 4, a hollow cylindrically-shaped magnetic body 10 has six permanent magnets 11 of a block-shaped cross-section perpendicular to the axial direction of a shaft 16 and six magnetic members 12 of an arcuate similar cross-section. These permanent magnets 11 and magnetic members 12 are alternately arranged in the circumferential direction of the cross-section of the magnetic body 10. To the ends of the magnetic

4

members 12, i.e., the top and bottom of the cylindrically shaped magnetic body 10, there are nonmagnetic endplates 14 and 15 affixed by bolts 13. The ends of the permanent magnets 11 contact the endplates 14 and 15. The permanent magnets 11 engage grooves formed in the sides of the magnetic members 12, therefore cannot be pulled outward in the radial direction. The above assembled hollow magnetic body 10 can be further reinforced by immersion or other surface treatment.

After the hollow magnetic body 10 and the endplates 14 and 15 are assembled, the shaft 16, which is constructed of a magnetic material such as carbon steel, chrome-molybdenum steel, etc. is passed through and affixed to the endplates 14 and 15.

The shaft 16 may also be affixed to the endplates 14 and 15 before affixing the hollow magnetic body 10 to the endplates 14 and 15.

In either case, the above affixment may be effected by passing the shaft 16 through the through-hole provided in the center portion of the endplates 14 and 15 by pressure-fit or by passing the shaft 16 through the above-said through-hole, then affixing it using an adhesive.

The axis of the shaft 16 and the cylindrical center line of the hollow magnetic body 10 coincide.

It should be noted that the outer diameter $R_1$ of the shaft 16 is smaller than the inner diameter $R_2$ of the hollow portion of the hollow magnetic body 10. Since $R_1 < R_2$, there is a clearance G between the hollow magnetic body 10 and the shaft 16. The clearance G is sufficiently large so that the amount of leakage magnetic flux in the hollow portion of the hollow magnetic body 10 passing through the shaft 16 is small. In other words, the size of the clearance G is determined so that the magnetic circuits formed by the hollow magnetic body 10 and the shaft 16

5

0121573

do not substantially reduce the magnetic flux in the outward end portion in the radial direction in the cross-section of the magnetic body of the permanent magnets 11. As one example, if the inner diameter $R_2$ of the hollow magnetic body 10 is made 50 mm, as opposed to an outer diameter $R_1$ of the shaft 16 of 40 mm, the size of the clearance G is made 5 mm.

In the rotor of the above-mentioned embodiment, since there is a clearance G between the outer circumference of the shaft 16 and the inner circumference of the the hollow magnetic body 10, the amount of the leakage magnetic flux in the hollow portion from the hollow magnetic body 10 passing through the shaft 16 is extremely small. Therefore, concentration of the magnetic flux of the magnetic circuits $ML_{11}$ to the outer circumference of the hollow magnetic body 10 is achieved.

The shaft 16 is constructed of inexpensive magnetic material. Therefore, the cost of the motor can be reduced over the case where a shaft of a nonmagnetic material is used.

Further, since the magnetic members 12 and the permanent magnets 11 are assembled using the shaft 16 as a reference and the magnetic members 12 are tightened by the bolts 13 to the endplates 14 and 15, shaft alignment and other difficulties in assembly in the prior art are eliminated.

While the above explanation was made in reference to an embodiment, the present invention is not limited to the embodiment. For example, the magnetic members 12 of the hollow magnetic body can also be comprised of a laminated body of punched plates. In such a case, the tightening bolts should pass through the laminated body and tighten between the endplates 14 and 15. Further, the cross-sectional shapes of the shaft 16 between the endplates 14 and 15 and the cross-sectional shape of the hollow portion of the hollow magnetic body 10 may be polygonal.

6

Generally, magnetic materials are easier to work than nonmagnetic materials, so the above-mentioned cross-sectional polygonal shapes can be easily formed.

CAPABILITY OF EXPLOITATION IN INDUSTRY

As clear from the above explanation, according to the present invention, the shaft is constructed of a magnetic material and a clearance is provided between the outer circumference of the shaft and the hollow magnetic body. By this, in a rotor for a synchronous motor, the cost of the apparatus becomes cheaper than with a conventional apparatus wherein the shaft is constructed of a nonmagnetic material. Also, problems such as axial eccentricity are eliminated, as compared with the method of attaching two shafts to a hollow magnetic body. Therefore, assembly work can be made preciser and easier. This is used particularly advantageously for synchronous motors for driving machine tools.

CLAIMS

1. A rotor for a synchronous motor wherein a hollow magnetic body, comprised of permanent magnets and magnetic members alternately arranged in a circumferential direction, is arranged around a shaft, characterized in that the shaft is formed of a magnetic material and a clearance is provided between the circumference of the shaft and the hollow magnetic body.

2. A rotor for a synchronous motor according to claim 1, wherein said hollow magnetic body forms a cylindrical shape with a center line coinciding with the axis of said shaft and wherein the top and bottom of the said cylindrically shaped hollow magnetic body are affixed to nonmagnetic endplates.

3. A rotor for a synchronous motor according to claim 2, wherein said shaft passes through and is affixed to said nonmagnetic endplates.

4. A rotor for a synchronous motor according to claim 2, wherein said hollow magnetic body is affixed to said nonmagnetic endplates by bolt tightening.

5. A rotor for a synchronous motor according to claim 3, wherein said shaft is affixed to said nonmagnetic endplates by pressure-fit.

6. A rotor for a synchronous motor according to claim 3, wherein said shaft is affixed to said nonmagnetic endplates by an adhesive.

7. A rotor for a synchronous motor according to claim 1, wherein said clearance is of a size just enough so that the amount of leakage magnetic flux in the hollow portion of said hollow magnetic body passing through said shaft is sufficiently reduced.

8. A rotor for a synchronous motor according to claim 1, wherein permanent magnets have a block-shaped cross-section perpendicular to the axial direction of said shaft.

9. A rotor for a synchronous motor according to claim 1 or claim 8, wherein said magnetic material has an arcuate cross-section perpendicular to the axial direction of said shaft.

10. A rotor for a synchronous motor according to claim 9, wherein said permanent magnets engage grooves formed in sides of said magnetic materials.

Fig. 1

Fig. 2

Fig. 3

Fig. 4

# INTERNATIONAL SEARCH REPORT

International Application No. PCT/JP83/00349

0121573

## I. CLASSIFICATION OF SUBJECT MATTER (if several classification symbols apply, indicate all) [3]

According to International Patent Classification (IPC) or to both National Classification and IPC

Int. Cl.[3] H02K 21/08

## II. FIELDS SEARCHED

### Minimum Documentation Searched [4]

| Classification System | Classification Symbols |
|---|---|
| I P C | H02K 21/08 |

| | Documentation Searched other than Minimum Documentation to the Extent that such Documents are Included in the Fields Searched [5] |
|---|---|
| | Jitsuyo Shinan Koho 1929 - 1982 |
| | Kokai Jitsuyo Shinan Koho 1971 - 1982 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| Y | JP, Y1, 38-11104 (Toshiba Corp.), 7. June. 1963 (7. 6. 63), Page 1, left column, line 32 to page 1, right column, line 16 | 1 - 10 |
| Y | JP,A, 52-106412 (Siemens A.G.), 7. September. 1977 (7. 9. 77) & DE,B, 2608421 & US, A, 4127786 | 1 - 10 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| December 13, 1983 (13.12.83) | January 9, 1984 (09.01.84) |

| International Searching Authority [1] | Signature of Authorized Officer [20] |
|---|---|
| Japanese Patent Office | |

Form PCT/ISA/210 (second sheet) (October 1981)